# EUROPEAN PATENT APPLICATION

(11) **EP 2 814 002 A1**
(43) Date of publication of application: **17.12.2014**
(21) Application number: 13746270.1
(22) Date of filing: 11.02.2013
(51) Int. Cl.: G07B 15/02, G08G 1/017

(54) **METHOD FOR AUTOMATICALLY MONITORING VEHICLE PARKING**

(30) Priority: 09.02.2012 RU 2012104370
(71) Applicant: Matsur, Igor Yurievich, Tula 300034 (RU)
(72) Inventor: Matsur, Igor Yurievich, Tula 300034 (RU)
(74) Representative: Jeck, Anton
(86) International application number: PCT/RU2013/000095
(87) International publication number: WO 2013/119146

(57) **Abstract**

The present invention relates to traffic control and, in particular, to control of paid parking lots.

A method of automated vehicle parking control comprises detection and identification of a vehicle on the given portion of the road, and matching the traffic data thus obtained with the set of rules for that portion, wherein the area is being probed with radio-frequency signals generated by vehicle detection nodes, which are mounted at pre-set places - borders of the portion, in order to detect and identify vehicles crossing the said borders. Vehicles, which have entered the area of radio-frequency probing, generate responses that contain code words with identification data of vehicles, using identification nodes the said vehicles are equipped with. The detection nodes then detect and decode the responses, recording the timing of each response and calculating the average time period vehicles require to cross the given portion of the road; and in case the time period, during which a vehicle is located within the borders of the portion, exceeds the calculated average time period vehicles require to cross the portion, the vehicle is considered to be parked.

## Description

### BACKGROUND OF THE INVENTION

### a. Field of the Invention

The present invention relates to traffic control and, in particular, to control of paid parking lots.

### b. Background of the Related Art

A conventional control system for parking lots with a number of parking places employs a vehicle detector connected to a billing device at each parking place, as well as a microprocessor with a timer clock. The timer clock is triggered by a signal received either from the vehicle detector or from the billing device, any of which should thus register the presence of a vehicle at a given parking place (see WO 2007/025364).

The problem of this system is that it requires each parking place to be equipped with a detector, which poses difficulties in case with large parking lots situated along the length of traffic areas. The number of detectors decreases reliability of the system, and raises its costs, all of which limit the application of this system.

Another known approach to a control system for paid parking lots has the following procedure (see RU 2271573 C1):
1. upon entering the parking place, the vehicle sends an SMS message over a GSM channel, containing:
   a. vehicle identification code,
   b. vehicle location code as calculated by a GNSS,
   c. the code of prepayment made by the owner of the vehicle;
2. the parking system hardware receives, decodes and stores the message;
3. a check is conducted for whether the owner of the vehicle has debts to the parking system;
4. the parking time and its limits are calculated;
5. the data, together with the information about the payment balance and a possible fine for an incorrect prepayment, are then sent to the owner of the vehicle in an SMS message over the billing center of the mobile operator;
6. the parking controller uses a portable parking scanner to scan the vehicle RFID-tag positioned on the windshield;
7. the vehicle identification data is then read and compared with the data from the SMS message;
8. the parking controller feeds the parking terminal with an SMS message over a GSM channel, containing the vehicle identification data and the controller ID;
9. the terminal checks the vehicle ID against its list, calculates the parking fee, sends the vehicle, controller and payment data to the billing center;
10. the payment balance of the owner of the vehicle is then calculated and sent to the controller's parking scanner and to the owner's cell phone;
11. in case there are insufficient funds on the owner's payment balance, the controller may issue a notice or a fine, or block the passage of the vehicle if necessary;
12. upon leaving the parking lot, the owner of the vehicle sends an SMS message over a GSM channel;
13. the parking terminal stops the timer clock and feeds the mobile parking complex with an SMS message about completion of the parking.

The main disadvantage of this approach is its complexity: it requires the owner of the vehicle interact with the parking controller through SMS messages, and that, in turn, requires the efficient and uninterrupted functioning of the mobile operator. Any glitch in the mobile communication services will delay the data exchange, which can extend the time needed to park the vehicle or even prevent the execution of the entire procedure. The conventional parking system thus depends on the quality of the communication services, the quality of the power system, and the availability of a cell phone, all of which limit the application of this approach.

Another conventional solution includes the following steps (see WO/2007/008055):
1. the system takes at least one picture of an area containing at least one portion of the road, and then uses an I/O device to detect and process the number of vehicles in the picture;
2. the system builds the traffic pattern based on a movement of at least one detected vehicle;
3. the system compares the calculated speed of a number of detected vehicles with a reference speed for a portion of the road with a number of vehicles detected;
4. the system compares the calculated speed of a number of detected vehicles with a pre-set benchmark speed;
5. the system identifies the locations of detected vehicles and checks them against a map containing the information on the number of parking places;
6. the system checks the availability of parking places.

This solution can be applied to detect the vehicles parked on a given portion of the road, but its reliability is low, because it depends on data obtained from an image. Recognition of vehicles in an image is error-prone, even if it has been made by a high-resolution detector, because it is impossible to supply standard reference images of vehicles taken from every possible angle. Even a system detecting vehicles by their integral parts, such as license plates, is not reliable enough, since in traffic, esp. near the traffic lights, vehicles are so packed, that it is difficult to discern their license plates, even if the detector is positioned at some elevation. It is also difficult to analyze the image, when weather conditions deteriorate and visibility is low. These disadvantages thus limit the application of this solution.

### SUMMARY OF THE INVENTION

Accordingly, the objective of the invention is to expand the application of the system by improving reliability of detection and identification of a vehicle on the given portion of the road.

To achieve the objective, the method of automated vehicle parking control comprises detection and identification of a vehicle on the given portion of the road, and matching the traffic data thus obtained with the set of rules for that portion, wherein the area is being probed with radio-frequency signals generated by vehicle detection nodes, which are mounted at pre-set places - borders of the portion, in order to detect and identify vehicles crossing the said borders. Vehicles, which have entered the area of radio-frequency probing, generate responses that contain code words with identification data of vehicles, using identification nodes the said vehicles are equipped with. The detection nodes then detect and decode the responses, recording the timing of each response and calculating the average time period vehicles require to cross the given portion of the road; and in case the time period, during which a vehicle is located within the borders of the portion, exceeds the calculated average time period vehicles require to cross the portion, the vehicle is considered to be parked.

In addition:
- the parking time on the given portion of the road is the time period from the moment the vehicle was registered by a detection node upon entering the portion to the moment it was registered again upon leaving the portion by the same or another node, minus the calculated average time period vehicles require to cross the portion;
- the identification data of the vehicle in the given portion of the road is stored in memory from the moment the vehicle has been registered upon entering the portion to the moment it is registered again upon leaving the portion;
- the direction in which the vehicle moves on the given portion of the road can be defined by comparing the data obtained by detection nodes, which have registered the vehicle on the borders of the portion;
- if a vehicle has been registered by one and the same detector both upon entering and upon leaving the given portion of the road, then the vehicle is considered to have changed its direction or to have made a U-turn while crossing the roadway;
- the average vehicle speed on the given portion of the road is a ratio between the distance from one border of the portion to another and the average time period a vehicle requires to cross the portion;
- if the number of parked vehicles exceeds the pre-set number for the given portion of the road, then a report on violation of parking regulations or about an incident (an abnormal situation) is generated and sent to the traffic police in order to prevent a traffic jam;
- a radio response is generated by the identification node, so that at least one parameter of the response corresponds to the vehicle identification data;
- passive or active RFID-tags are used as identification nodes.;
- the average traffic flow rate for the given portion of the road is calculated according to the number of vehicles, which have crossed the near and the far borders of the portion in unit time, excluding the parked ones;
- the traffic flow density for the given portion of the road is calculated according to the number of vehicles located between the near and the far borders of the portion at the same time, excluding the parked ones;
- the average traffic dynamic clearance for the given portion of the road is a ratio between the area of the portion from its near border to its far border, excluding parking places, and the average number of vehicles located within the borders of the portion at the same time, excluding the parked ones.

### DETAILED DESCRIPTION OF THE INVENTION

The method of automated vehicle parking control comprises detection and identification of a vehicle on the given portion of the road, and matching the traffic data thus obtained with the set of rules for that portion, wherein the area is being probed with radio-frequency signals generated by vehicle detection nodes, which are mounted at pre-set places - borders of the portion, in order to detect and identify vehicles crossing the said borders. Vehicles, which have entered the area of radio-frequency probing, generate responses that contain code words with identification data of vehicles, using identification nodes the said vehicles are equipped with. The detection nodes then detect and decode the responses, recording the timing of each response and calculating the average time period vehicles require to cross the given portion of the road; and in case the time period, during which a vehicle is located within the borders of the portion, exceeds the calculated average time period vehicles require to cross the portion, the vehicle is considered to be parked.

The parking time on the given portion of the road is the time period from the moment the vehicle was registered by a detection node upon entering the portion to the moment it was registered again upon leaving the portion by the same or another node, minus the calculated average time period vehicles require to cross the portion.

The identification data of the vehicle in the given portion of the road is stored in memory from the moment the vehicle has been registered upon entering the portion to the moment it is registered again upon leaving the portion. The direction in which the vehicle moves on the given portion of the road can be defined by comparing the data obtained by detection nodes, which have registered the vehicle on the borders of the portion, and if a vehicle has been registered by one and the same detector both upon entering and upon leaving the given portion of the road, then the vehicle is considered to have changed its direction or to have made a U-turn while crossing the roadway.

The average vehicle speed on the given portion of the road is a ratio between the distance from one border of the portion to another and the average time period a vehicle requires to cross the portion.

If the number of parked vehicles exceeds the pre-set number for the given portion of the road, then a report on violation of parking regulations or about an incident (an abnormal situation) is generated and sent to the traffic police in order to prevent a traffic jam.

A radio response is generated by the identification node, so that at least one parameter of the response corresponds to the vehicle identification data, wherein passive or active RFID-tags are used as identification nodes.

The average traffic flow rate for the given portion of the road is calculated according to the number of vehicles, which have crossed the near and the far borders of the portion in unit time, excluding the parked ones.

The traffic flow density for the given portion of the road is calculated according to the number of vehicles located between the near and the far borders of the portion at the same time, excluding the parked ones.

The average traffic dynamic clearance for the given portion of the road is a ratio between the area of the portion from its near border to its far border, excluding parking places, and the average number of vehicles located within the borders of the portion at the same time, excluding the parked ones.

### DESCRIPTION OF THE PREFERRED EMBODIMENT

First, a portion of the road to be monitored by the automated parking control system is chosed, wherein the said portion may be situated either in an urban or in a rural area.

Vehicles are to be equipped with identification nodes, which function as both a receiver, which should coherently receive signals generated by detection nodes, and a transmitter to generate responses, wherein the transmitter is to be able to embed a codeword, which identifies the vehicle, into the response generated. Such response structure provides for identification of a vehicle moving past the mounting place of the detection node.

Detection nodes are to be mounted on the borders of at least one given portion of the road - a parking lot containing a number of parking places. The distance between the borders of the portion differs from portion to portion and can vary from 100 m to 1 km and more. Detection nodes can be mounted on posts, at farms, or under the roadway.

A vehicle approaching the given portion of the road crosses one of its borders. At that moment, it is probed by a detection node mounted on this border, and the identification node of the vehicle generates a response containing a codeword with vehicle data, which is then received by the detection node. The data of vehicles, which have entered the given portion and have been detected, are stored in memory of parking control devices. When the vehicle crosses the same border of the portion or another one when leaving the portion, it is detected and identified again. As a result, the system registers all the vehicles, which enter and leave the given portion of the road.

Simultaneous detection and identification of vehicles entering the given portion of the road provides for their reliable and precise registration and allows to calculate the time they spend to cross the portion.

Vehicles may cross the given portion of the road without stopping, in which case the time they spend there will be equal to the average time period vehicles require to cross the portion without stopping. The average time period required to cross the given portion of the road is calculated on the basis of the analysis of the traffic flow, i.e. how much time vehicles need to cross the given portion without stopping. The traffic flow speed and the average time period are calculated either continuously during the whole day or periodically, e.g. once per hour. In case the time period, during which a vehicle is located within the borders of the portion, exceeds the calculated average time period most vehicles require to cross the portion, the vehicle is considered to be parked.

That is, if the time period between the vehicle has been detected by detection nodes mounted on the borders of the portion of the road upon entering and upon leaving the portion exceeds the calculated average time period most vehicles require to cross the portion, the vehicle is considered to be parked. In this case, the parking time for the given vehicle is being counted, until it leaves the parking area. Based on the time counted, the parking cost to be paid is calculated, if necessary, and a parking bill is then sent to the owner of the vehicle at their address, retrieved from the vehicle owners' database, or the needed sum is drawn automatically from the owner's account corresponding to the vehicle identification data, which are received from the identification node of the vehicle.

The parking starts either from the moment the vehicle has been first detected upon crossing one of the borders of the given portion of the road, or from the moment it has been considered to be parked (the starting time has been calculated). The parking ends, when the vehicle has been detected again on either of the borders of the portion (the parking lot), taking into consideration the time period required to cross the portion.

A vehicle may cross the given portion of the road in either direction, park there for some time and/or turn around and leave the portion. In the latter case, it will be detected by one and the same detection node both upon entering and upon leaving the portion.

### Example:

A vehicle equipped with the identification node approaches the given portion of the road situated in the town centre and crosses one of its borders. On the borders of the given portion, there are detection nodes sending and receiving signals, which are mounted under the roadway; these nodes emit radio-frequency signals in the direction of the supposed position of the vehicle. The main lobe of the detection node antenna is directed upwards, its width is about 180°, and its range is about 1 m. When the identification node of a passing vehicle gets into the area covered by the detection node, it generates a radio response allowing to detect the vehicle.

This response by the identification node also contains a codeword, which is unique for each vehicle, that is why no mistake is made when registering responses by side lobes of detector node antennas, so that one and the same vehicle is registered only once, regardless of the number of responses received by the detector node.

Using radio probing in order to detect a vehicle located in the area covered by detection nodes provides for complete and reliable identification of all vehicles crossing the borders of the given portion of the road, regardless of time of the day, season, weather and lighting conditions, thus increasing reliability of the system as a whole.

Vehicle data are stored in memory of parking control devices on the given portion of the road from the moment the vehicle enters the portion till the moment it leaves. It is defined, whether the vehicle has left the portion, by matching the identification data of the vehicle detected by the detection node on the border of the portion with the data, which have already been stored on parking control devices on the given portion.

Vehicles may cross the given portion of the road without stopping, in which case the time they spend there will be equal to the average time period vehicles require to cross the portion without stopping.

The average time period required to cross the given portion of the road is calculated on the basis of the analysis of the traffic flow, i.e. how much time vehicles need to cross the given portion without stopping. The average time period required to cross the given portion depends on the length of the portion, its speed limit, traffic situation, the traffic rate, weather conditions, etc. and thus can change over time.

In case the time period, during which a vehicle is located within the borders of the portion, exceeds the calculated average time period most vehicles require to cross the portion, the vehicle is considered to be parked.

If the vehicle is considered to be parked, the parking time is counted, which is then compared to the time limit allowed for the given portion of the road. In case the parking time exceeds the limit, a fine bill is issued automatically and sent to the owner of the vehicle at their address, provided in the vehicle owners' database during the registration process of the vehicle, or the fine sum is drawn automatically from the owner's account corresponding to the vehicle identification data, which are received from the identification node of the vehicle.

In case there is a paid parking lot on the given portion of the road, the parking time is measured against a set rate, and after parking is over, a parking bill is issued and sent to the owner of the vehicle at their address to be paid, or the needed sum is drawn automatically from the owner's account corresponding to the vehicle identification data, which are received from the identification node of the vehicle.

The system calculates the average traffic rate for the given portion of the road, which is the number of vehicles, which have crossed the boundaries of the portion (excl. the parked ones) in unit time.

The system determines the traffic flow density for the given portion of the road, calculating the number of vehicles located between the near and the far borders of the portion at the same time, excluding the parked ones.

The system determines the average traffic dynamic clearance for the given portion of the road, which is a ratio between the area of the portion from its near border to its far border, excluding parking places, and the average number of vehicles located within the borders of the portion at the same time, excluding the parked ones.

All nodes and devices needed for the preferred embodiment of the invention can be produced from existing standard components and stock devices.

Therefore, the present method has much wider application if compared to the conventional ones, since it increases reliability of vehicle detection and identification on the given portion of the road.

## Claims

1. A method of automated vehicle parking control comprising:
detection and identification of a vehicle on the given portion of the road, and
matching the traffic data thus obtained with the set of rules for that portion;
wherein the area is being probed with radio-frequency signals generated by vehicle detection nodes, which are mounted at pre-set places - borders of the portion, in order to detect and identify vehicles crossing the said borders; and
wherein vehicles, which have entered the area of radio-frequency probing, generate responses that contain code words with identification data of vehicles, using identification nodes the said vehicles are equipped with;
the detection nodes then detect and decode the responses, recording the timing of each response and calculating the average time period vehicles require to cross the given portion of the road; and
in case the time period, during which a vehicle is located within the borders of the portion, exceeds the calculated average time period vehicles require to cross the portion, the vehicle is considered to be parked.

2. The method of **claim 1,** wherein the parking time on the given portion of the road is the time period from the moment the vehicle was registered by a detection node upon entering the portion to the moment it was registered again upon leaving the portion by the same or another node, minus the calculated average time period vehicles require to cross the portion.

3. The method of **claim 1,** wherein the identification data of the vehicle in the given portion of the road is stored in memory from the moment the vehicle has been registered upon entering the portion to the moment it is registered again upon leaving the portion.

4. The method of **claim 1,** wherein the direction in which the vehicle moves on the given portion of the road can be defined by comparing the data obtained by detection nodes, which have registered the vehicle on the borders of the portion.

5. The method of **claim 1,** wherein if a vehicle has been registered by one and the same detector both upon entering and upon leaving the given portion of the road, then the vehicle is considered to have changed its direction or to have made a U-turn while crossing the roadway.

6. The method of **claim 1,** wherein the average vehicle speed on the given portion of the road is a ratio between the distance from one border of the portion to another and the average time period a vehicle requires to cross the portion.

7. The method of **claim 1,** wherein, if the number of parked vehicles exceeds the pre-set number for the given portion of the road, then a report on violation of parking regulations or about an incident (an abnormal situation) is generated and sent to the traffic police in order to prevent a traffic jam.

8. The method of **claim 1,** wherein a radio response is generated by the identification node, so that at least one parameter of the response corresponds to the vehicle identification data.

9. The method of **claim 1,** wherein passive or active RFID-tags are used as identification nodes.

10. The method of **claim 1,** wherein the average traffic flow rate for the given portion of the road is calculated according to the number of vehicles, which have crossed the near and the far borders of the portion in unit time, excluding the parked ones.

11. The method of **claim 1,** wherein the traffic flow density for the given portion of the road is calculated according to the number of vehicles located between the near and the far borders of the portion at the same time, excluding the parked ones.

12. The method of **claim 1,** wherein the average traffic dynamic clearance for the given portion of the road is a ratio between the area of the portion from its near border to its far border, excluding parking places, and the average number of vehicles located within the borders of the portion at the same time, excluding the parked ones.
